(19) Europäisches Patentamt / European Patent Office / Office européen des brevets

(11) **EP 3 721 189 B1**

(12) **EUROPEAN PATENT SPECIFICATION**

(45) Date of publication and mention
of the grant of the patent:
**01.04.2026 Bulletin 2026/14**

(21) Application number: **18877050.7**

(22) Date of filing: **20.09.2018**

(51) International Patent Classification (IPC):
**G01J 1/42** *(2006.01)*   **H01S 3/00** *(2006.01)*
**B23K 26/70** *(2014.01)*

(52) Cooperative Patent Classification (CPC):
**B23K 26/342; B22F 10/28; B22F 10/31;**
**B22F 12/49; B22F 12/90; B23K 26/0626;**
**B23K 26/0643; B23K 26/082; B23K 26/123;**
**B23K 26/127; B23K 26/705; B29C 64/153;**
**B33Y 10/00; B33Y 30/00; B33Y 50/02;**     (Cont.)

(86) International application number:
**PCT/US2018/051842**

(87) International publication number:
**WO 2019/094110 (16.05.2019 Gazette 2019/20)**

(54) **OPTIC TRAIN MONITORING FOR ADDITIVE MANUFACTURING**

OPTISCHE ZUGÜBERWACHUNG FÜR DIE GENERATIVE FERTIGUNG

SURVEILLANCE DE TRAIN OPTIQUE POUR FABRICATION ADDITIVE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.11.2017 US 201715807967**

(43) Date of publication of application:
**14.10.2020 Bulletin 2020/42**

(73) Proprietor: **General Electric Company**
**Schenectady, NY 12345 (US)**

(72) Inventors:
• **ROYCHOWDHURY, Subhrajit**
**Niskayuna, New York 12309 (US)**
• **SPEARS, Thomas**
**Niskayuna, New York 12309 (US)**
• **GAMBONE, Justin**
**Niskayuna, New York 12309 (US)**

(74) Representative: **Hafner & Kohl PartmbB**
**Schleiermacherstraße 25**
**90491 Nürnberg (DE)**

(56) References cited:
WO-A1-2017/106131      DE-A1- 102006 031 232
JP-A- 2012 174 720      JP-A- H0 216 424
JP-B2- 2 658 208      US-A1- 2005 115 940
US-A1- 2006 215 246      US-A1- 2008 277 564
US-A1- 2009 179 353      US-A1- 2013 154 160
US-A1- 2014 126 593      US-A1- 2017 242 424
US-A1- 2017 242 424

(52) Cooperative Patent Classification (CPC): (Cont.)
**G01J 1/4257;** B22F 10/85; B22F 12/44; Y02P 10/25

**Description**

BACKGROUND

Some embodiments disclosed herein relate to industrial assets and, more particularly, to systems and methods associated with optic train monitoring for an additive manufacturing machine.

In some additive manufacturing processes, a laser system is used to generate an item. For example, power from the laser system might be directed to a powder in a build chamber to print the item as a series of horizontal slices. The exact placement and amount of the power may be strictly controlled to facilitate an accurate generation of the item. In some cases, however, various components of a laser system might inadvertently reduce the actual amount of power being delivered. For example, laser degradation and optical train losses can reduce the amount power that is delivered. Continuously testing a laser system to ensure that it is functioning properly can be a costly approach that leads to printers being unavailable as they are brought off-line for testing. Moreover, locating the cause of a power loss (so that it can be corrected) may be a time consuming and error prone process. It would therefore be desirable to efficiently and accurately facilitate creation of an industrial asset item via an additive manufacturing process.

US 2017/0242424 A1 discloses methods and systems for producing a wire using additive manufacturing methods which comprises printing on a moving strip substrate. US 2006/215246 A1 discloses an additive manufacturing system according to the preamble of claim 1.

SUMMARY

A system according to the invention is defined in claim 1. Further optional features of the invention are defined in the dependent claims. The invention facilitates creation of an industrial asset item via an additive manufacturing process. A laser source receives a laser power command signal PC and generates a laser beam output in accordance with PC. A first sensor measures a power PD of a laser beam delivered for the additive manufacturing process. A second sensor measures a power PO associated with the laser beam output from the laser source, wherein at least a portion of an optic train is located between the first and second sensors. A monitoring apparatus, coupled to the first and second sensors, monitors PC, PO, and PD to facilitate creation of the industrial asset item. Responsive to the monitoring, the system controls at least one aspect of the additive manufacturing process, automatically generates an advisory indication, automatically localizes a detected problem in the system, automatically predicts a future performance of the system, *etc.*

Technical effects of some embodiments of the invention are improved and computerized ways to efficiently and accurately facilitate creation of an industrial asset item via an additive manufacturing process. With these and other advantages and features that will become hereinafter apparent, a more complete understanding of the nature of the invention can be obtained by referring to the following detailed description and to the drawings appended hereto.

BRIEF DESCRIPTION OF THE DRAWINGS

FIG. 1 illustrates a portion of an additive manufacturing system.
FIG. 2 illustrates power monitoring for an additive manufacturing system.
FIG. 3 illustrates a portion of an additive manufacturing system in accordance with some embodiments.

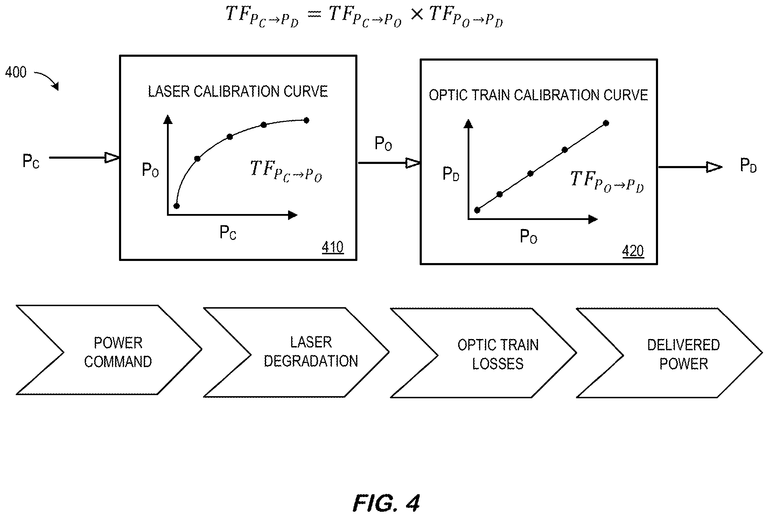

FIG. 4 illustrates power monitoring for an additive manufacturing system according to some embodiments.
FIG. 5 is a method that may be associated with an additive manufacturing system in accordance with some embodiments.
FIG. 6 is a high-level overview of a system for laser self-calibration according to some embodiments.
FIG. 7 is an optic train health monitoring architecture in accordance with some embodiments.
FIG. 8 is a more detailed cross-section of an additive manufacturing printer according to some embodiments.
FIG. 9 is an advisory indication method that may be associated with an additive manufacturing system in accordance with some embodiments.
FIG. 10 illustrates an advisory indication display in accordance with some embodiments.
FIG. 11 is a performance prediction method that may be associated with an additive manufacturing system in accordance with some embodiments.
FIG. 12 illustrates a performance prediction display in accordance with some embodiments.
FIG. 13 illustrates a platform according to some embodiments.
FIG. 14 is a tabular portion of a laser power monitoring database in accordance with some embodiments.
FIG. 15 illustrates a tablet computer providing a display according to some embodiments.

DETAILED DESCRIPTION

In the following detailed description, numerous specific details are set forth in order to provide a thorough understanding of embodiments. However, it will be understood by those of ordinary skill in the art that the embodiments may be practiced without these specific details. In other instances, well-known methods, procedures, components and circuits have not been described in detail so as not to obscure the embodiments.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Correct power delivery with minimal variation to a powder bed may be an important factor associated build quality for an additive manufacturing process. As used herein, the phrase "additive manufacturing process" refers to Direct Metal Laser Melting ("DMLM") process or similar three-dimensional printing technique. A fraction of the power may, however, be lost along the different components of a laser system while a laser beam travels from a source to a powder bed. As a result, components, such as those within an optic train, may be calibrated in connection with commanded as compared to delivered power using an involved and time consuming method. Unfortunately, the loss in an optic train may vary with degradation and/or misalignment or faults in different components (and is therefore highly variable). To prevent this, a time-consuming calibration might be performed at a regular interval (*e.g.*, every six months) during which the machine will remain off-line. Also, in case of a fault, the current method to identify and correct for it is also time consuming and involved. According to some embodiments described herein, systems and methods are provided for online health monitoring of various components in an optic train while builds are ongoing. Moreover, self-calibrate for deviations might be made when and/or service advisories might be automatically generated. This may also facilitate automatic root-cause identification (with a certain degree of confidence) when service is needed, which may also reduce downtimes.

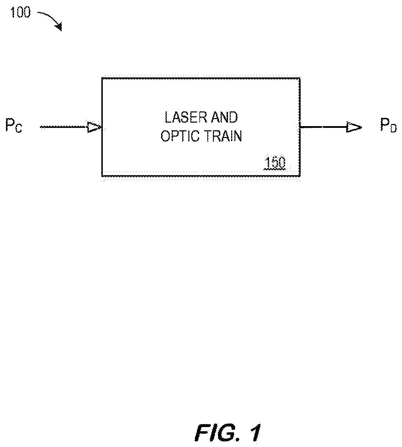

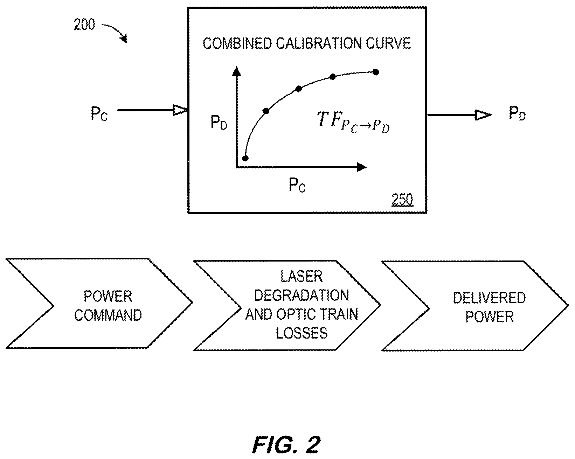

FIG. 1 is a high-level overview of a portion of an additive manufacturing system 100. In particular, a commanded amount of power ($P_C$) may be signaled to a laser and optic train 150 and, as a result, a laser having an amount of power may be delivered ($P_D$) (*e.g.,* delivered to powder in a build chamber of a three-dimensional printer). FIG. 2 illustrates power monitoring 200 for such an additive manufacturing system. Once again, a laser is commanded specific power values ($P_C$) and a power meter is kept at the powder bed to measure the delivered power ($P_D$) at that point. A calibration curve ($TF_{P_C \rightarrow P_D}$) 250 is then generated from the input and output data. As the calibration curve is generated for the entire laser system, it might not provide any insight about the root cause of a fault that may have caused the curve 250 to shift. Also, without a melt-pool monitoring system any shift in the curve remains undetected until after the part is built (that is, the shift may only be detectable during post build inspection). Even with a melt-pool monitoring system, the root cause of shift is not always evident (and even if detected, the machine still needs to be taken offline for re-calibration).

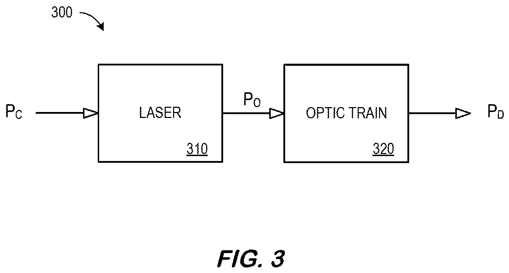

Some embodiments described herein apply a "divide-and-conquer" approach for automatic root cause identification, self-correction and/or calibration, generation of service advisories, *etc.* FIG. 3 is a high-level overview of a portion of an additive manufacturing system 300. In particular, a commanded amount of power ($P_C$) may be signaled to a laser 310 than outputs a beam with power $P_O$. The beam travels through an optic train 120 and, as a result, a laser having an amount of power may be delivered ($P_D$) (*e.g.,* delivered to powder in a build chamber of a three-dimensional printer). FIG. 3 illustrates power monitoring 300 for such an additive manufacturing system. Note that the combined calibration curve of FIG. 2 is broken up into two calibration curves 410, 420 associated with: (1) the laser and (2) the optic train, respectively. The commanded power to the laser $P_C$ and the laser output $P_O$ are measured online during a build to detect any significant shift from the respective calibration curve 410 to generate a flag. In some embodiments, a bead on plate scan pattern can be run before starting any build to update the calibration curve automatically (which might, for example, take less than a minute) during which the system measure $P_C$ and $P_O$. If the laser is degraded to a point where it does not have enough headroom, the system may generate a service advisory to replace the laser.

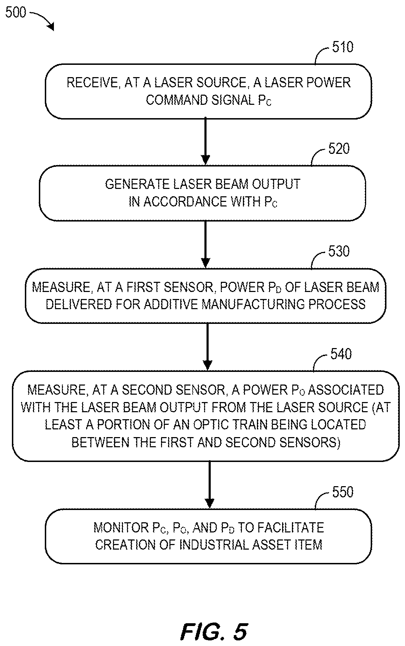

According to some embodiments, the elements of the system 400 automatically facilitate creation of an industrial asset item via an additive manufacturing process. For example, FIG. 5 illustrates a method 500 that might be performed according to some embodiments of the present invention. The flow charts described herein do not imply a fixed order to the steps, and embodiments of the present invention may be practiced in any order that is practicable. Note that any of the methods described herein may be performed by hardware, software, or any combination of these approaches. For example, a computer-readable storage medium may store thereon instructions that when executed by a machine result in performance according to any of the embodiments described herein.

Note that the method of FIG. 5 may facilitate creation of an industrial asset item via an additive manufacturing process (associated with a DMLM three-dimensional printer). At 510, a laser source may receive a laser power command signal $P_C$. At 520, the laser source may generate a laser beam output in accordance with $P_C$. At 530, a first sensor may measure a power $P_D$ of a laser beam delivered for the additive manufacturing process. As used herein, the term "sensor" might refer to any apparatus capable of measuring power, including direct and indirect power measuring devices. By way of examples only, a sensor might be associated with a power meter, a photodiode, a photometer, a solid-state semiconductor detector, a photomultiplier tube, a thermocouple, an in-beam profiler, *etc.*

At 540, a second sensor may measure a power $P_O$ associated with the laser beam output from the laser source. Note that at least a portion of an optic train is located between the first and second sensors. As used herein, the phrase "optic train" might refer to a portion of a laser system that includes various components, such as an optical fiber, a collimator, a galvanometer, a beam splitter, a dynamic focusing unit, *etc.*

At 550, a monitoring apparatus may monitor $P_C$, $P_O$, and $P_D$ to facilitate creation of the industrial asset item. According to the invention, the monitoring is associated with a first laser power lookup table representing power loss within the laser and a second laser power lookup table representing power loss within the optic train. The first laser power lookup table is associated with, for example, a laser calibration curve $TF_{P_C \to P_O}$. Similarly, a second laser power lookup table is associated with an optic train calibration curve $TF_{P_O \to P_D}$. In this case, overall system calibration curve might be represented as follows:

$$TF_{P_C \to P_D} = TF_{P_C \to P_O} \times TF_{P_O \to P_D}.$$

According to the invention, the monitoring apparatus is configured to control at least one aspect of the additive manufacturing process in response to the monitoring in substantially real time. For example, the value of the commanded power $P_C$ might be automatically adjusted to ensure that the amount of delivered power $P_D$ will be appropriate. According to other embodiments, the system may automatically generate an advisory indication (*e.g.*, an alert message might be automatically transmitted to an operator or maintenance technician) in response to the monitoring. According to some embodiments, the system might automatically localize a detected problem in the system in response to the monitoring. For example, the system might indicate that the problem is most likely in the laser, the optic train, *etc.* In some embodiments, a future performance of the system might be automatically predicted in response to the monitoring (*e.g.*, and an offline maintenance procedure might be automatically scheduled to avoid future problems).

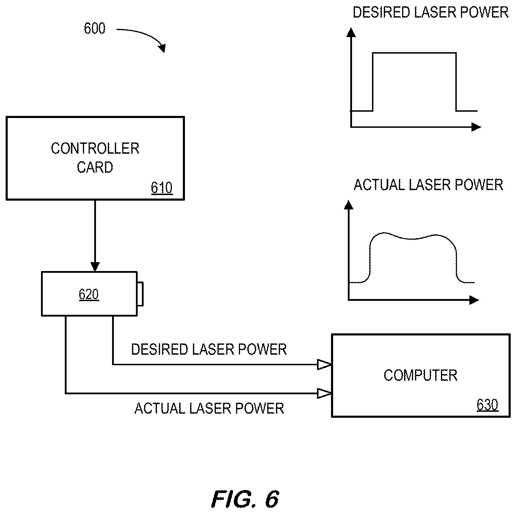

Note that a suitable control loop might be designed around a laser to further extend the life of the laser by extending headroom via feedback when otherwise it would need to be replaced. FIG. 6 is a high-level overview of a system 600 for laser self-calibration according to some embodiments. A controller card may indicate a desired laser power to a laser 620 (*e.g.*, $P_C$). The laser 620 may then indicate desired amount of power and an actual amount of power to a computer 630, such as a mini field agent (*e.g.*, via an RS 232 port).

The computer 630 and/or other elements of the system might be, for example, associated with a Personal Computer ("PC"), laptop computer, a tablet computer, a smartphone, an enterprise server, a server farm, and/or a database or similar storage devices. According to some embodiments, an "automated" system 600 may monitor optic train health. As used herein, the term "automated" may refer to, for example, actions that can be performed with little (or no) intervention by a human.

As used herein, devices, including those associated with the computer 630 and any other device described herein, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The computer 630 may store information into and/or retrieve information from data stores. The data stores might, for example, store electronic records representing laser power levels, calibration curves, predicted performance, *etc.* The data stores may be locally stored or reside remote from the computer 630. Although a single laser 620 and computer 630 are shown in FIG. 6, any number of such devices may be included. Moreover, various devices described herein might be combined according to embodiments of the present invention. For example, in some embodiments, the controller card 610 and laser 620 (and/or other devices) might be co-located and/or may comprise a single apparatus.

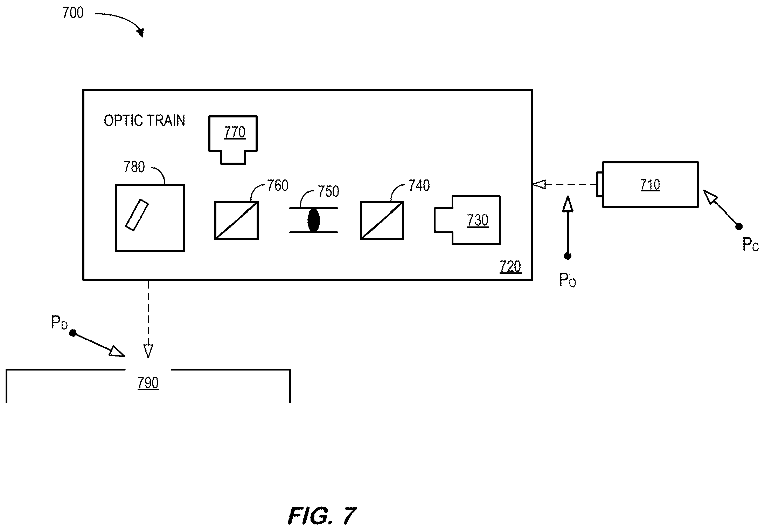

According to some embodiments, an optic train calibration curve is further broken down by inserting high bandwidth (*e.g.*, several Hz) direct/indirect power measuring devices (*e.g.*, small-footprint power meters, photodiodes/photometers with suitable mirror and filter combination, *etc.*) at appropriate places. For example, FIG. 7 illustrates an optic train health monitoring architecture 700 according to some embodiments. The architecture 700 includes a laser 710 that delivers a beam to an optic train 720. The optic train 720 might include, for example, a collimator 730, beam splitters 740, 760, a dynamic focusing unit 750, a laser power meter 770, a galvanometer 780, *etc.* The optic train 720 may provide a build laser beam to a window of a three-dimensional printer build chamber 790.

Note that thermocouples can also be inserted along various points in the optic train 720 according to some embodiments to generate service advisory related to optics heating/thermal lensing (*e.g.*, possibly caused by dirty optics). In this way, the divide-and-conquer approach may help identify a root cause automatically and the monitoring engine or application can automatically recalibrate the system or generate a service advisory depending on the severity and nature of fault.

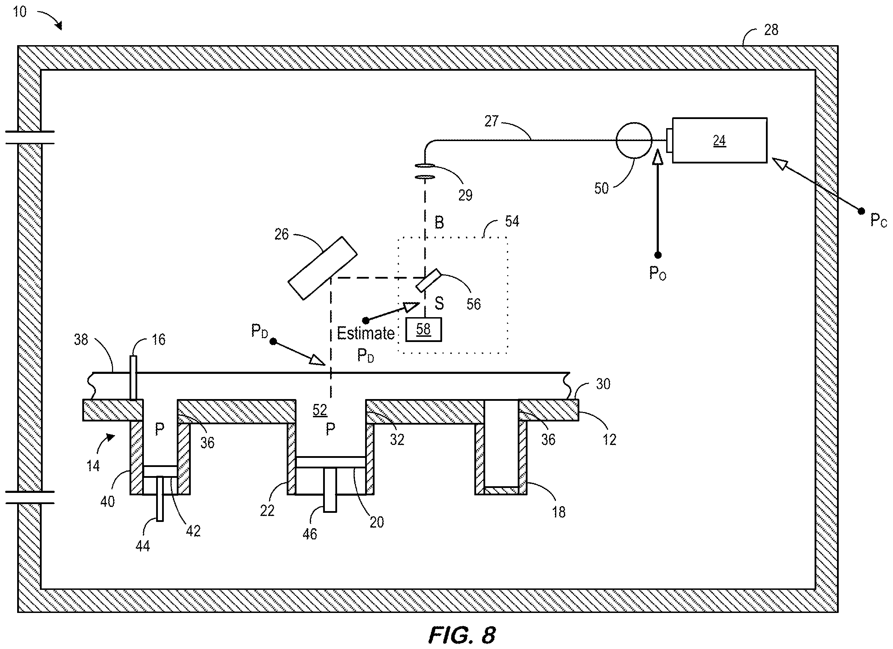

Referring to FIG. 8, illustrated schematically is an additive manufacturing machine 10 suitable for carrying out an additive manufacturing method. Basic components of the machine 10 include a table 12, a powder supply 14, a re-coater 16, an overflow container 18, a build platform 20 surrounded by a build chamber 22, a laser source 24, and a beam steering apparatus 26, all surrounded by a housing 28. Each of these components will be described in more detail below.

The table 12 is a rigid structure defining a planar worksurface 30. The worksurface 30 is coplanar with and defines a virtual workplane. In the illustrated example, it includes a build opening 32 communicating with the build chamber 22 and exposing the build platform 20, a supply opening 34 communicating with the powder supply 14, and an overflow opening 36 communicating with the overflow container 18.

The re-coater 16 is a rigid, laterally-elongated structure that lies on the worksurface 30. It is connected to an actuator 38 operable to selectively move the re-coater 16 along the worksurface 30. The actuator 38 is depicted schematically in the FIG., with the understanding devices such as pneumatic or hydraulic cylinders, ballscrew or linear electric actuators, and so forth, may be used for this purpose.

The powder supply 14 comprises a supply container 40 underlying and communicating with the supply opening 34, and an elevator 42. The elevator 42 is a plate-like structure that is vertically slidable within the supply container 40. It is connected to an actuator operable to selectively move the elevator 42 up or down. When the elevator 42 is lowered, a supply of powder "P" of a desired composition (for example, metallic, ceramic, and/or organic powder) may be loaded into the supply container 40. When the elevator 42 is raised, it exposes the powder P above the worksurface 30. Other types of powder supplies may be used; for example, powder, may be dropped into the build chamber 22 by an overhead device (not shown).

The build platform 20 is a plate-like structure that is vertically slidable below the build opening 32. It is connected to an actuator 46 operable to selectively move the build platform 20 up or down. The actuator 46 is depicted schematically in the figure, with the understanding that devices such as pneumatic or hydraulic cylinders, ballscrew or linear electric actuators, and so forth, may be used for this purpose. When the build platform 20 is lowered into the build chamber 22 during a build process, the build chamber 22 and the build platform 20 collectively surround and support a mass of powder P along with any components being built. This mass of powder is generally referred to as a "powder bed," and this specific category of additive manufacturing process may be referred to as a "powder bed process." The overflow container 18 underlies and communicates with the overflow opening 36, and serves as a repository for excess powder P.

The laser source 24 may comprise any device operable to generate a laser beam "B" of suitable power and other operating characteristics to melt and fuse the powder P during the build process, described in more detail below. The beam steering apparatus 26 may include one or more mirrors, prisms, and/or lenses and provided with suitable actuators, and arranged so that the beam B can be focused to a desired spot size and steered to a desired position in plane coincident with the worksurface 30. For purposes of convenient description, this plane may be referred to as a X-Y plane, and a direction perpendicular to the X-Y plane is denoted as a Z-direction (X, Y, and Z being three mutually perpendicular directions). The beam B may be referred to herein as a "build beam". The illustrated example, laser energy is transferred to the beam steering apparatus 26 through an optical fiber 27 and a conventional collimator 29.

The housing 28 serves to isolate and protect the other components of the machine 10. During a build process described below, the housing 28 may be provided with a flow of an appropriate shielding gas which, among other functions, excludes oxygen from the build environment.

An exemplary basic build process for a workpiece W using the apparatus described above is as follows. The build platform 20 is moved to an initial high position. The build platform 20 is lowered below the worksurface 30 by a selected layer increment. The layer increment affects the speed of the additive manufacturing process and the resolution of the workpiece W. As an example, the layer increment may be about 10 to 50 micrometers (0.0003 to 0.002 in.). Powder "P" is then deposited over the build platform 20 for example, the elevator 42 of the supply container 40 may be raised to push powder through the supply opening 34, exposing it above the worksurface 30. The re-coater 16 is moved across the worksurface to spread the raised powder P horizontally over the build platform 20. Any excess powder P drops through the overflow opening 36 into the overflow container 18 as the re-coater 16 passes from left to right. Subsequently, the re-coater 16 may be moved back to a starting position. The leveled powder P may be referred to as a "build layer" and the exposed upper surface thereof may be referred to as a "build surface."

The laser source 24 is used to melt a two-dimensional cross-section or layer of the workpiece W being built. The laser source 24 emits the beam B and the beam steering apparatus 26 is used to steer a focal spot of the beam B over the exposed powder surface in an appropriate pattern. A small portion of exposed layer of the powder P surrounding the focal spot, referred to herein as a "weld pool" 52 is heated by the beam B to a temperature allowing it to sinter or melt, flow, and consolidate. As an example, the weld pool 52 may be on the order of 100 micrometers (0.004 in.) wide. This step may be referred to as fusing the powder P.

The build platform 20 is moved vertically downward by the layer increment, and another layer of powder P is applied in a similar thickness. The laser source 24 again emits the beam B and the beam steering apparatus 26 is used to steer the focal spot of the beam B over the exposed powder surface in an appropriate pattern. The exposed layer of the powder P is heated by the beam B to a temperature allowing it to sinter or melt, flow, and consolidate both within the top layer and with the lower, previously-solidified layer. This cycle of moving the build platform 20, applying powder P, and then directed energy fusing the powder P is repeated until the entire workpiece W is complete.

The machine 10 and its operation are a representative example of a "powder bed machine." It will be understood that the principles described herein are applicable to other types of additive manufacturing machines. For example, a known type of additive manufacturing machine operates by using a laser to selectively cure a layer of liquid resin to form a workpiece. This process may be referred to as Stereo Lithography ("SLA").

During the build process, improper or inconsistent beam power is undesirable. If the beam power is too high or low, it can produce inconsistent fusing results. Accordingly, the machine 10 may be provided with a laser power monitoring apparatus 54 and power meter 50 which are operable to measure laser power during operation of the machine 10. Note that the laser source 24 might receive $P_C$, the power meter 50 might measure $P_O$, and the laser power monitoring apparatus 54 might measure an estimate of $P_D$ in accordance with any of the embodiments described herein.

The laser power monitoring apparatus 54 includes a beam splitter 56 which is operable to split off a sample beam "S" from the beam B and direct the sample beam S to a sensor 58. The sample beam S represents a predetermined fixed percentage of the power of the beam B. As used herein, the term "beam splitter" includes any device operable to direct the majority of the beam B along the primary beam path and to divert a controlled portion of the beam. Nonlimiting examples of devices which may be used as beam splitters include dielectric mirrors, prisms, and metallic mirrors. For example, a metallic mirror may be provided which reflects the majority of the light incident thereupon, but which also transmits some incident light therethrough.

The sensor 58 may be any device which is operable to receive the sample beam S and to generate a signal proportional to the power of the sample beam S. Nonlimiting examples of suitable sensors include semiconductor-based detectors (*e.g.,* photodiodes or photodiodes arrays) and photomultiplier tubes. The sensor 58 is positioned so as to receive the sample beam S from the beam splitter 56. An enclosure may be provided surrounding the beam splitter 56 and the sensor 58 to prevent the escape of laser radiation.

In the illustrated example, the beam splitter 56 is placed downstream of the collimator 29. The beam splitter 56 turns the majority of the beam B through 90° and directs it to the beam steering apparatus 26. The sample beam S is directed to the sensor 58. Other physical arrangements of the beam splitter 56 and the sensor 58 are possible. For example, the beam splitter 56 could be positioned upstream of the collimator 29.

The fraction of the build beam B split off to constitute the sample beam S may be determined based on the sensitivity and resolution of the sensor S. It is generally desirable to minimize the energy in the sample beam S as this reduces the power available in the build beam B. For example, if the laser source 24 has a nominal output of 200 W, and a split of 1% is used, this would result in 198 W delivered to the beam steering apparatus 26 and 2 W delivered to the sensor 58.

The output signal of the sensor 58 may be scaled as required to appropriately represent the power of the build beam B. In the above-noted example where the sample beam S is 1% of laser power, the sensor's output signal would be scaled by a factor of 100 to represent the actual power of the build beam B. If necessary or desirable, further scaling or adjustment to the output signal could be made to compensate for the power lost in the sample beam S and to thereby improve the accuracy of the beam power measurement. In general, the additive manufacturing process is sensitive to a variation in laser power of approximately 1%. It is noted that sensors 58 are commercially available which can detect power levels of small fractions of a Watt with an accuracy of 1% of scale. Accordingly, it is believed that the split or amount of leakage to the sensor 58 could be extremely small, for example 1/100 of 1% of the nominal power of the laser source 24.

Laser power data obtained from the sensor 58 and power meter 50 may be used for various purposes. For example, it may be used for machine qualification. In this process, the laser power data would be used to characterize the laser power before the machine 10 is used for the first time. This gives a baseline for subsequent measurements, and also gives the user information about the machine 10. For example, a specific machine 10 may be known to have a particular laser power output which may require higher than average laser power settings to achieve acceptable results during the build process.

As another example, the laser power data may be used for machine calibration. In this process, the sensor 58 described above would be used to characterize the laser power at regular intervals, for example every three to six months. The series of laser power data collections could be compared to the baseline laser power data and/or to each other. The laser power data can also be compared to a rated power of the laser source 24. These comparisons could help identify a change in the machine characteristics. Corrective action could take the form of machine maintenance or repairs.

A monitoring method may include establishing one or more predetermined limits for the laser power (relative to the selected, desired, or commanded power level), referred to herein as "laser power limits," for example a minimum power, or a maximum power. A monitoring method may include taking a discrete action in response to one or more laser power limits being exceeded, such as providing a visual or audible alarm to a local or remote operator. A monitoring method may include pausing or stopping the build process in response to one or more laser power limits being exceeded. This is another example of a discrete action. A monitoring method may include real-time control of laser power using methods such as: statistical process control, feedforward control, feedback control using proportional, proportional-integral, or proportional-integral-derivative control logic, neural network control algorithms, or fuzzy logic control algorithms.

The operation of the apparatus described above may be controlled, for example, by software running on one or more processors embodied in one or more devices such as a Programmable Logic Controller ("PLC") or a microcomputer (not shown). Such processors may be coupled to the sensors and operating components, for example, through wired or wireless connections. The same processor or processors may be used to retrieve and analyze sensor data, for statistical analysis, and for feedback control.

The methods described herein have several advantages over the prior art. For example, they may allow for consistent beam power while minimizing interruption of the build process. This has the potential to reduce workpiece variation and scrap rate, improve part quality, and monitor the condition of the machine 10.

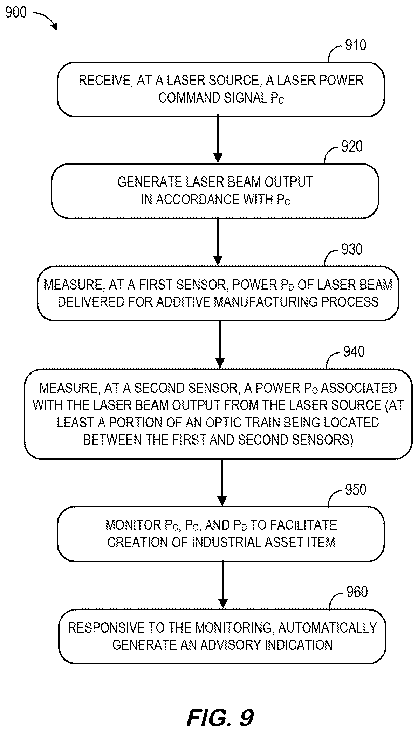

The method 900 of FIG. 9 may facilitate the automatic creation of advisory indications, alert messages, *etc.* for an additive manufacturing process (associated with a DMLM three-dimensional printer). At 910, a laser source may receive a laser power command signal $P_C$. At 920, the laser source may generate a laser beam output in accordance with $P_C$. At 930, a first sensor may measure a power $P_D$ of a laser beam delivered for the additive manufacturing process. At 940, a second sensor may measure a power $P_O$ associated with the laser beam output from the laser source. Note that at least a portion of an optic train is located between the first and second sensors.

At 950, a monitoring apparatus may monitor $P_C$, $P_O$, and $P_D$ to facilitate creation of the industrial asset item. At 960, the system may automatically generate an advisory indication responsive to the monitoring of 950. For example, when power raises above a predetermined limit (or falls below a lower threshold) and advisory might be automatically transmitted to an operator. According to some embodiments, the advisory might automatically indicate which portion of a laser system is malfunctioning (*e.g.,* the laser source, the optic train, a specific component in the optic train, *etc.*).

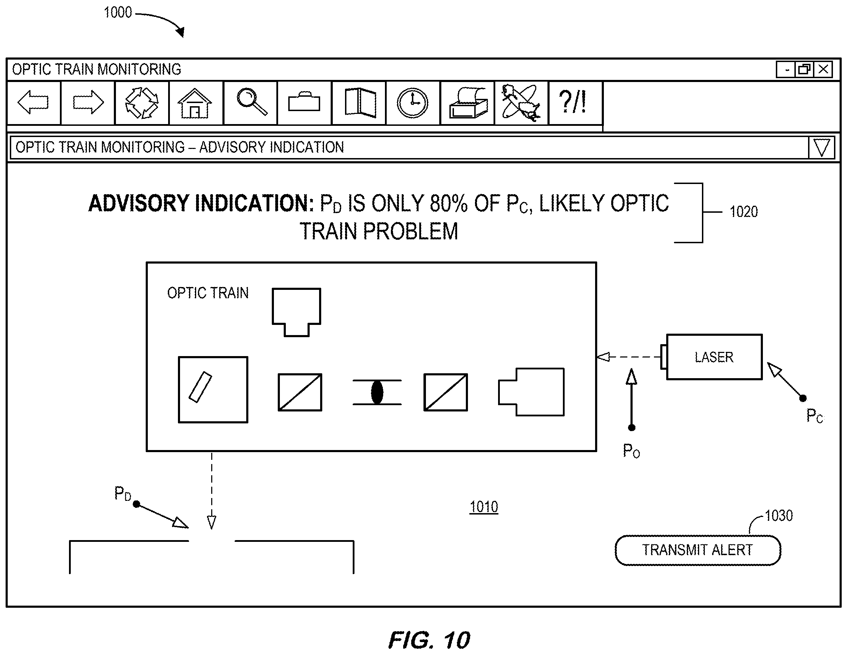

FIG. 10 illustrates an advisory indication display 1000 in accordance with some embodiments. The display 1000 may include an interactive user interface 1010 that graphically displays the status of various elements laser system. According to some embodiments, selection of one or more elements in the display 1000 may result in the appearance of more detailed information about the system, allow an operator to make parameter adjustments, *etc.* Note that the display 1000 include an advisory indication 1020 that indicates which portion of the system might be malfunctioning. According to some embodiments, selection of an icon 1030 (*e.g.* via a computer mouse) may transmit an alert to another operator, device, maintenance scheduling application, *etc.*

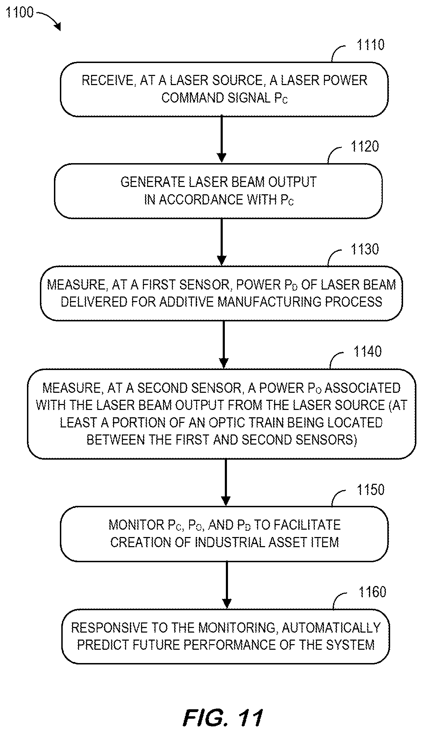

The method 1100 of FIG. 11 may facilitate the automatic prediction of future laser system performance for an additive manufacturing process (associated with a DMLM three-dimensional printer). At 1112, a laser source may receive a laser power command signal $P_C$. At 1120, the laser source may generate a laser beam output in accordance with $P_C$. At 1130, a first sensor may measure a power $P_D$ of a laser beam delivered for the additive manufacturing process. At 1140, a second sensor may measure a power $P_O$ associated with the laser beam output from the laser source. Note that at least a portion of an optic train is located between the first and second sensors.

At 1150, a monitoring apparatus may monitor $P_C$, $P_O$, and $P_D$ to facilitate creation of the industrial asset item. At 1160, the system may automatically generate prediction of future performance responsive to the monitoring of 1150. For example, the system might notice that power losses in the optic train are slowly increasing and recommend a particular maintenance procedure be performed before a particular date to avoid malfunctions. According to some embodiments, the prediction might include recommendations, a list of parts to be inspected, one or more replacement requests, *etc.*

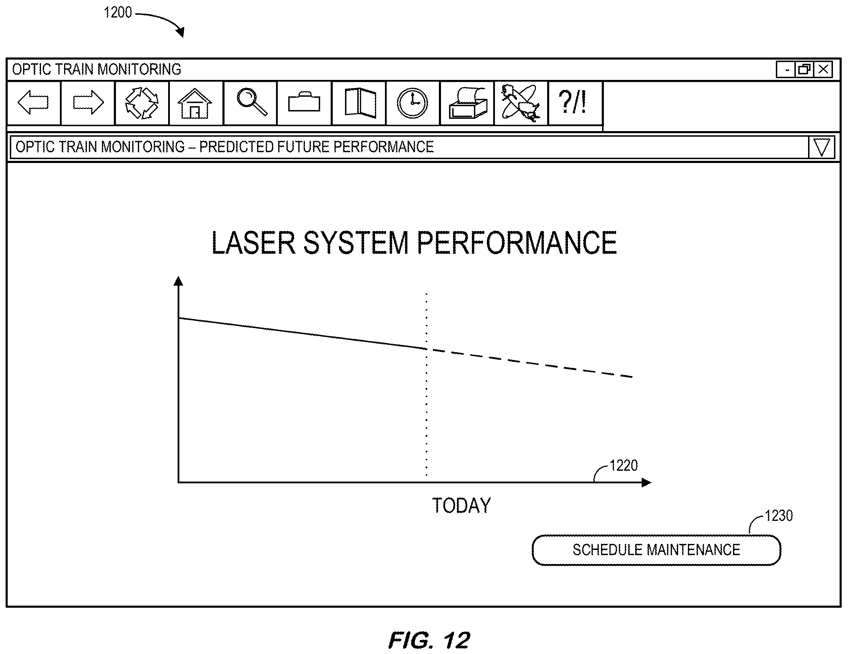

FIG. 12 illustrates a predicted future performance display 1200 in accordance with some embodiments. The display 1200 may include an interactive user interface 1210 that graphically displays the status of various elements laser system. According to some embodiments, selection of one or more elements in the display 1200 may result in the appearance of more detailed information about the system, allow an operator to make parameter adjustments, *etc.* The display 1200 may include a timeline 1220 indicating measured performance (illustrated by a solid line on the timeline 1220) and predicted future performance (illustrated by a dashed line on the timeline 1220). According to some embodiments, selection of an icon 1230 (*e.g.* via a computer mouse) may schedule a maintenance procedure for an additive manufacturing laser system, predict when tolerances will become unacceptable, *etc.*

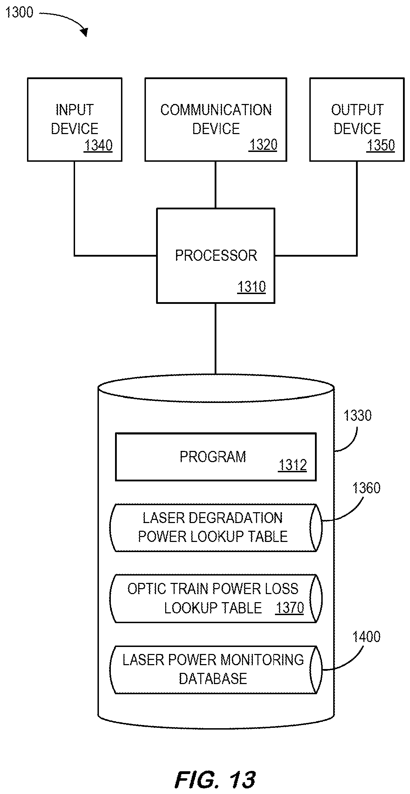

Embodiments described herein may comprise a tool that facilitates creation of an industrial asset item via an additive manufacturing process and may be implemented using any number of different hardware configurations. For example, FIG. 13 illustrates a platform 1300 that may be, for example, associated with the system 600 of FIG. 6 (as well as other systems described herein). The platform 1300 comprises a processor 1310, such as one or more commercially available Central Processing Units ("CPUs") in the form of one-chip microprocessors, coupled to a communication device 1320 configured to communicate via a communication network (not shown in FIG. 13). The communication device 1320 may be used to communicate, for example, with one or more remote expert devices. Note that communications exchanged via the communication device 1320 may utilize security features, such as those between a public internet user and an internal network of an insurance enterprise. The security features might be associated with, for example, web servers, firewalls, and/or PCI infrastructure. The platform 1300 further includes an input device 1340 (*e.g.,* a mouse and/or keyboard to enter information about a design file, an industrial asset item, a laser system, *etc.*) and an output device 1350 (*e.g.,* to output maintenance reports, generate production status messages, *etc.*).

The processor 1310 also communicates with a storage device 1330. The storage device 1330 may comprise any appropriate information storage device, including combinations of magnetic storage devices (*e.g.,* a hard disk drive), optical storage devices, mobile telephones, and/or semiconductor memory devices. The storage device 1330 stores a program 1312 and/or network security service tool or application for controlling the processor 1310. The processor 1310 performs instructions of the program 1312, and thereby operates in accordance with any of the embodiments described herein. For example, the processor 1310 may determine that a laser source has received a laser power command signal $P_C$ and will thus generate a laser beam output in accordance with $P_C$. A first sensor may measure a power $P_D$ of a laser beam delivered for the additive manufacturing process and that value may be recorded by the processor 1310. A second sensor may measure a power $P_O$ associated with the laser beam output from the laser source (with at least a portion of an optic train being located between the first and second sensors) and that value may also be recorded by the processor 1310. The processor 1310 may then monitor $P_C$, $P_O$, and $P_D$ to facilitate creation of the industrial asset item. Responsive to the monitoring, processor 1310 may control at least one aspect of the additive manufacturing process, automatically generate an advisory indication, automatically localize a detected problem in the system, automatically predict a future performance of the system, *etc.*

The program 1312 may be stored in a compressed, uncompiled and/or encrypted format. The program 1312 may furthermore include other program elements, such as an operating system, a database management system, and/or device drivers used by the processor 1310 to interface with peripheral devices.

As used herein, information may be "received" by or "transmitted" to, for example: (i) the platform 1300 from another device; or (ii) a software application or module within the platform 1300 from another software application, module, or any other source.

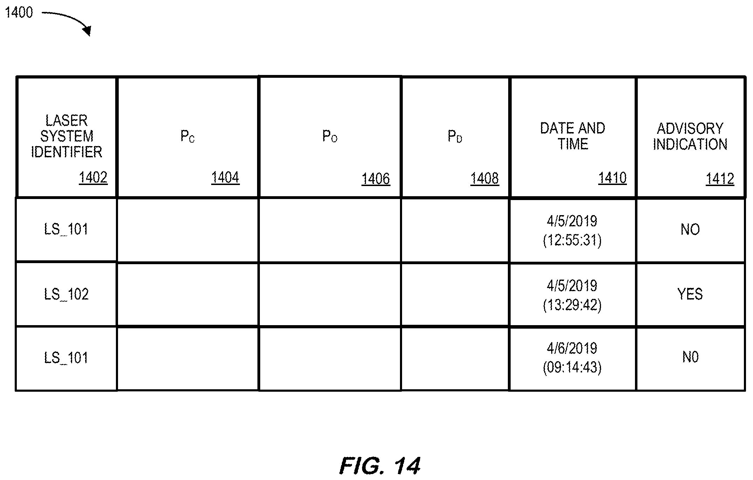

In some embodiments (such as shown in FIG. 13), the storage device 1330 further stores a laser degradation power lookup table 1360, an optic train power loss lookup table 1370, and a laser power monitoring database 1400. An example of a database that might be used in connection with the platform 1300 will now be described in detail with respect to FIG. 14. Note that the database described herein is only an example, and additional and/or different information may be stored therein. Moreover, various databases might be split or combined in accordance with any of the embodiments described herein. For example, the optic train power loss lookup table 1370 and/or laser power monitoring database 1400 might be combined and/or linked to each other within the program 1312.

Referring to FIG. 14, a table is shown that represents the laser power monitoring database 1400 that may be stored at the platform 1300 in accordance with some embodiments. The table may include, for example, entries identifying power measurements associated with a laser system. The table may also define fields 1402, 1404, 1406, 1408, 1410, 1412 for each of the entries. The fields 1402, 1404, 1406, 1408, 1410, 1412 may, according to some embodiments, specify: a laser system identifier 1402, a commanded power $P_C$ 1404, an output power $P_O$ 1406, a delivered power $P_D$ 1408, a date and time 1410, and an advisory action 1412. The laser power monitoring database 1400 may be created and updated, for example, in substantially real time during an additive manufacturing build process.

The laser system identifier 1402 may be, for example, a unique alphanumeric code identifying a laser system of a three-dimensional DMLM printer. The commanded power $P_C$ 1404, the output power $P_O$ 1406, and the delivered power $P_D$ 1408 may represent measurements made by various sensors located within the laser system. The data and time 1510 might indicate when the measurements were made and the advisory indication 1512 might indicate whether or not the measurements resulted in an advisory indication (*e.g.,* transmission of an alert message or signal).

Thus, some embodiments described herein may provide technical advantages, including an online health monitoring system that may automatically identify root causes of faults in the optical system of a DMLM machine. Moreover, embodiments may provide for self-calibrating the system or generating a service advisory as warranted by the degree and the nature of the fault. This may help unplanned, preventable breakdowns and unnecessary scheduled maintenance downtimes. When a machine needs to go off-line for service requirements, a health monitoring engine in accordance with some embodiments described herein might be able to point out the root cause with a relatively high degree of confidence (thereby reducing troubleshooting time).

The following illustrates various additional embodiments of the invention. These do not constitute a definition of all possible embodiments, and those skilled in the art will understand that the present invention is applicable to many other embodiments. Further, although the following embodiments are briefly described for clarity, those skilled in the art will understand how to make any changes, if necessary, to the above-described apparatus and methods to accommodate these and other embodiments and applications.

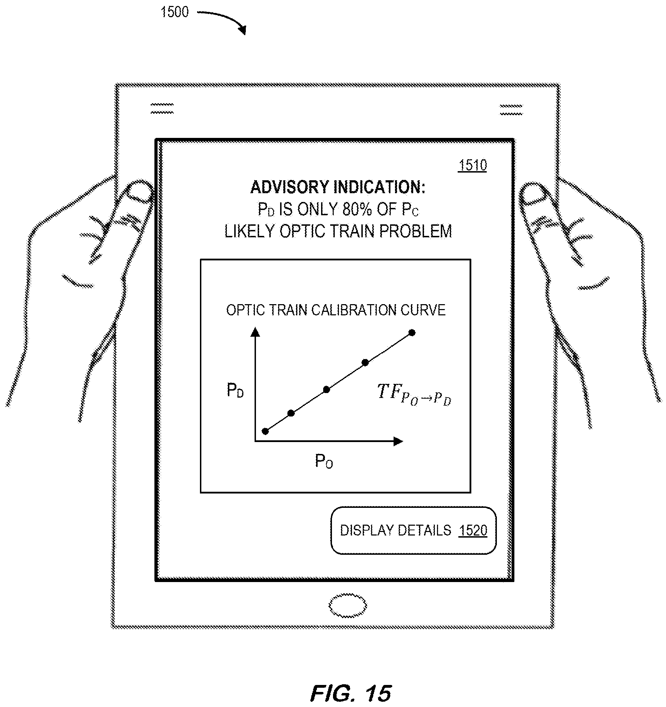

Although specific hardware and data configurations have been described herein, note that any number of other configurations may be provided in accordance with embodiments of the present invention (*e.g.,* some of the information described herein may be combined or stored in external systems). Moreover, although embodiments have been described with respect to industrial systems, note that embodiments might be associated with other types of computing systems, including non-industrial systems, consumer items, *etc.* Similarly, the displays shown and described herein are provided only as examples, and other types of displays and display devices may support any of the embodiments. For example, FIG. 15 illustrates a tablet computer 1500 with a scan path generation design display 1510 that might utilize a graphical user interface. The display 1510 might include a depiction of an optic train calibration curve. Note that selection of an element on the display 1510 might result in a display of further information about that element. Moreover, the display 1510 might comprise an interactive user interface (*e.g.,* via a touchscreen) and includes a "display details" icon 1520 in accordance with any of the embodiments described herein.

Some embodiments have been described with respect to the creation of an "industrial asset item," which might be, for example, an engine part, a generator component, *etc.* Note, however, that as used herein the phrase "industrial asset item" might refer to any other type of item, including: consumer electronics parts, toys, household goods, automotive parts, *etc.* In general, embodiments may address the challenges associated is laser systems of additive manufacturing machines.

According to the invention, the additive printing process being monitored is a DMLM process.

The present invention has been described in terms of several embodiments solely for the purpose of illustration. Persons skilled in the art will recognize from this description that the invention is not limited to the embodiments described but may be practiced with modifications and alterations limited only by the scope of the appended claims.

**Claims**

1. A system (10) to facilitate creation of an industrial asset item via an additive manufacturing process, wherein the additive manufacturing process is associated with a Direct Metal Laser Melting ("DMLM") process, comprising:

    a laser source (24) to receive a laser power command signal $P_C$ and to generate a laser beam output in accordance with $P_C$;
    a first sensor (58) to measure a power $P_D$ of a laser beam delivered for the additive manufacturing process;
    a second sensor (50) to measure a power $P_O$ associated with the laser beam output from the laser source (24),
    the system being **characterised in that** at least a portion of an optic train is located between the first and second sensors (58, 50); and **in that** it further comprises
    a monitoring apparatus, coupled to the first and second sensors (58, 50), adapted to:

        monitor $P_C$, $P_O$, and $P_D$ to facilitate creation of the industrial asset item;
        wherein said monitoring is associated with a first laser power lookup table representing power loss within the laser and a second laser power lookup table representing power loss within the optic train;

    wherein the first laser power lookup table is associated with a laser calibration curve $TF_{P_C \to P_C}$; and
    wherein the second laser power lookup table is associated with an optic train calibration curve $TF_{P_O \to P_D}$;
    wherein the monitoring apparatus is further adapted to:
    control at least one aspect of the additive manufacturing process in response to the monitoring in substantially real time.

2. The system (10) of claim 1, wherein the monitoring apparatus is further adapted to:
automatically generate an advisory indication in response to the monitoring.

3. The system (10) of claim 1, wherein the monitoring apparatus is further adapted to:
automatically localize a detected problem in the system (10) in response to the monitoring.

4. The system (10) of claim 1, wherein the monitoring apparatus is further adapted to:
automatically predict a future performance of the system (10) in response to the monitoring.

**5.** The system (10) of claim 1, wherein the optic train includes at least one of: (i) an optical fiber (27), (ii) a collimator (29), (iii) a galvanometer, (iv) a beam splitter (26), and (v) a dynamic focusing unit.

**6.** The system (10) of claim 1, wherein at least one of the first and second sensors (58, 50) are associated with at least one of: (i) a direct power measuring device, (ii) an indirect power measuring device, (iii) a power meter, (iv) a photodiode, (v) a photometer, (vi) a solid-state semiconductor detector, (vii) a photomultiplier tube, (viii) a thermocouple, and (ix) an in-beam profiler.

**7.** The system (10) of claim 1, wherein an overall system calibration curve comprises:

$$TF_{P_C \to P_D} = TF_{P_C \to P_O} \times TF_{P_O \to P_D}.$$

**8.** The system (10) of claim 1, wherein the first sensor (58) is associated with a laser power monitoring apparatus (54) adapted to:

split off a predetermined percentage of a build beam to define a sample beam,
direct the sample beam to a sensor element,
generate, by the sensor element, a signal proportional to the power of the sample beam, and
scale the signal from the sensor element to generate a laser power measurement representative of a power level of the build beam.

**9.** The system (10) of claim 8, wherein the build beam is split via transmission through a reflective optic.

**Patentansprüche**

**1.** Ein System (10) zur Erleichterung der Erstellung eines industriellen Vermögenswerts über ein additives Fertigungsverfahren, bei dem das additive Fertigungsverfahren mit einem Direktmetalllaserschmelzverfahren ("DMLM") verbunden ist, das Folgendes umfasst:

eine Laserquelle (24), um ein Laserleistungsbefehlssignal $P_C$ zu empfangen und einen Laserstrahlausgang gemäß $P_C$ zu erzeugen;
einen ersten Sensor (58) zur Messung der Leistung $P_D$ eines Laserstrahls, der für das additive Fertigungsverfahren geliefert wird;
einen zweiten Sensor (50) zur Messung einer Leistung $P_O$, die mit der Laserstrahlausgabe der Laserquelle (24) verbunden ist,
das System **dadurch gekennzeichnet ist, dass** sich mindestens ein Teil eines optischen Zuges zwischen dem ersten und dem zweiten Sensor befindet (58, 50); und dass es weiter umfasst
ein Überwachungsgerät, gekoppelt mit dem ersten und dem zweiten Sensor (58, 50), angepasst an:

Überwachung von $P_C$, $P_O$ und $P_D$, um die Erstellung des Postens des industriellen Vermögenswerts zu erleichtern;
wobei die Überwachung mit einer ersten Laserleistungsabfragetabelle, die die Leistungsverluste innerhalb des Lasers darstellt, und einer zweiten Laserleistungsabfragetabelle, die die Leistungsverluste innerhalb des optischen Zuges darstellt, verbunden ist;

wobei die erste Laserleistungsabfragetabelle einer Laserkalibrierkurve zugeordnet ist; $TF_{P_C \to P_C}$, und
wobei die zweite Laserleistungsabfragetabelle einer optischen Zugkalibrierkurve zugeordnet ist; $TF_{P_O \to P_D}$
wobei das Überwachungsgerät weiter angepasst ist an:
Steuerung mindestens eines Aspekts des additiven Fertigungsprozesses als Reaktion auf die Überwachung im Wesentlichen in Echtzeit.

**2.** Das System (10) nach Anspruch 1, wobei die Überwachungsvorrichtung weiter angepasst ist an: automatisch eine beratende Anzeige als Reaktion auf die Überwachung erzeugen.

**3.** Das System (10) nach Anspruch 1, wobei die Überwachungsvorrichtung weiter angepasst ist an: automatisch ein erkanntes Problem im System (10) als Reaktion auf die Überwachung lokalisieren.

**4.** Das System (10) nach Anspruch 1, wobei die Überwachungsvorrichtung weiter angepasst ist an: automatisch eine zukünftige Leistung des Systems (10) als Reaktion auf die Überwachung vorherzusagen.

**5.** Das System (10) nach Anspruch 1, wobei der Optikzug mindestens eines der folgenden Merkmale aufweist: (i) eine optische Faser (27), (ii) ein Kollimator (29), (iii) ein Galvanometer, (iv) ein Strahlteiler (26) und (v) eine dynamische Fokussiereinheit.

**6.** Das System (10) nach Anspruch 1, wobei mindestens einer der ersten und zweiten Sensoren (58, 50) mit mindestens einem von: (i) eine direkte Leistungsmesseinrichtung, (ii) eine indirekte Leistungsmesseinrichtung, (iii) ein Leistungsmesser, (iv) eine Photodiode, (v) ein Photometer, (vi) ein Halbleiterdetektor für Festkörper, (vii) eine Photomultiplierröhre, (viii) ein Thermoelement und (ix) ein Einstrahlprofiler.

7. Das System (10) nach Anspruch 1, wobei eine Gesamtsystem-Kalibrierkurve Folgendes umfasst:

$$TF_{P_C \to P_D} = TF_{P_C \to P_S} \times TF_{P_O \to P_D}.$$

8. Das System (10) nach Anspruch 1, wobei der erste Sensor (58) einer Laserleistungsüberwachungsvorrichtung (54) zugeordnet ist, die angepasst ist an:

einen vorbestimmten Prozentsatz eines Baustrahls abspalten, um einen Probenstrahl zu definieren,
den Probenstrahl auf ein Sensorelement zu lenken,
durch das Sensorelement ein Signal erzeugen, das proportional zur Leistung des Abtaststrahls ist, und
Skalieren Sie das Signal des Sensorelements, um eine Laserleistungsmessung zu erzeugen, die für einen Leistungspegel des Baustrahls repräsentativ ist.

9. Das System (10) nach Anspruch 8, wobei der Baustrahl durch Übertragung durch eine reflektierende Optik aufgespalten wird.

## Revendications

1. Un système (10) destiné à faciliter la création d'un élément d'actif industriel au moyen d'un procédé de fabrication additive, dans lequel le procédé de fabrication additive est associé à un procédé de fusion laser directe des métaux («DMLM»), comprenant:

une source laser (24) pour recevoir un signal de commande de puissance laser $P_C$ et générer une sortie de faisceau laser conformément à $P_C$;
un premier capteur (58) pour mesurer la puissance $P_D$ d'un faisceau laser livré pour le procédé de fabrication additive;
un deuxième capteur (50) pour mesurer une puissance $P_O$ associée à la sortie du faisceau laser de la source laser (24),
le système étant **caractérisé en ce qu'**au moins une partie d'un train optique est située entre le premier et le deuxième capteurs (58, 50); et qu'il comprend en outre
un appareil de surveillance, couplé aux premier et deuxième capteurs (58, 50), adapté:

surveiller $P_C$, $P_O$, et $P_D$ pour faciliter la création de l'élément d'actif industriel;

dans laquelle ladite surveillance est associée à une première table de recherche de puissance laser représentant la perte de puissance dans le laser et à une deuxième table de recherche de puissance laser représentant la perte de puissance dans le train optique;

où la première table de recherche de puissance laser est associée à une courbe d'étalonnage laser $TP_{P_C \to P_O}$; et
dans laquelle la deuxième table de recherche de puissance laser est associée à une courbe d'étalonnage du train optique; $TF_{P_O \to P_D}$
dans laquelle l'appareil de surveillance est en outre adapté:
contrôler au moins un aspect du procédé de fabrication additive en réponse à la surveillance en temps sensiblement réel.

2. Le système (10) de la revendication 1, dans lequel l'appareil de surveillance est en outre adapté:
générer automatiquement une indication consultative en réponse à la surveillance.

3. Le système (10) de la revendication 1, dans lequel l'appareil de surveillance est en outre adapté:
localiser automatiquement un problème détecté dans le système (10) en réponse à la surveillance.

4. Le système (10) de la revendication 1, dans lequel l'appareil de surveillance est en outre adapté:
prévoir automatiquement une performance future du système (10) en réponse à la surveillance.

5. Le système (10) de la revendication 1, dans lequel le train optique comprend au moins l'un des éléments suivants: i) une fibre optique (27), ii) un collimateur (29), iii) un galvanomètre, iv) un séparateur de faisceau (26) et v) une unité de mise au point dynamique.

6. Le système (10) de la revendication 1, dans lequel au moins un des premier et deuxième capteurs (58, 50) est associé à au moins un des éléments suivants: (i) un dispositif de mesure directe de la puissance, (ii) un dispositif de mesure indirecte de la puissance, (iii) un compteur de puissance, (iv) une photodiode, (v) un photomètre, (vi) un détecteur semiconducteur à semi-conducteurs à semi-conducteurs, (vii) un tube photomultiplicateur, (viii) un thermocouple et (ix) un profileur intégré au faisceau.

7. Le système (10) de la revendication 1, dans lequel une courbe d'étalonnage globale du système comprend:

$$TF_{P_C \to P_D} = TF_{P_C \to P_C} \times TF_{P_O \to P_D}.$$

8. Le système (10) de la revendication 1, dans lequel le premier capteur (58) est associé à un appareil de surveillance de la puissance laser (54) adapté:

> séparer un pourcentage prédéterminé d'un faisceau de construction pour définir un faisceau d'échantillon,
> diriger le faisceau d'échantillons vers un élément de capteur,
> générer, par l'élément capteur, un signal proportionnel à la puissance du faisceau de prélèvement, et
> Mettre à l'échelle le signal de l'élément capteur pour générer une mesure de puissance laser représentative d'un niveau de puissance du faisceau de construction.

9. Le système (10) de la revendication 8, dans lequel le faisceau de construction est divisé par transmission au moyen d'une optique réfléchissante.

$$TF_{P_C \to P_D} = TF_{P_C \to P_C} \times TF_{P_O \to P_D}.$$

100

$P_C$ → LASER AND
OPTIC TRAIN

150

→ $P_D$

*FIG. 1*

*FIG. 2*

EP 3 721 189 B1

300

$P_C$ → LASER
310

$P_O$ → OPTIC TRAIN
320

→ $P_D$

*FIG. 3*

$$TF_{P_C \to P_D} = TF_{P_C \to P_O} \times TF_{P_O \to P_D}$$

*FIG. 4*

500 ⌐

510

RECEIVE, AT A LASER SOURCE, A LASER POWER
COMMAND SIGNAL $P_C$

520

GENERATE LASER BEAM OUTPUT
IN ACCORDANCE WITH $P_C$

530

MEASURE, AT A FIRST SENSOR, POWER $P_D$ OF LASER BEAM
DELIVERED FOR ADDITIVE MANUFACTURING PROCESS

540

MEASURE, AT A SECOND SENSOR, A POWER $P_O$ ASSOCIATED
WITH THE LASER BEAM OUTPUT FROM THE LASER SOURCE (AT
LEAST A PORTION OF AN OPTIC TRAIN BEING LOCATED
BETWEEN THE FIRST AND SECOND SENSORS)

550

MONITOR $P_C$, $P_O$, AND $P_D$ TO FACILITATE
CREATION OF INDUSTRIAL ASSET ITEM

*FIG. 5*

FIG. 6

*FIG. 7*

*FIG. 8*

900 ⌐

910

```
RECEIVE, AT A LASER SOURCE, A LASER POWER
COMMAND SIGNAL $P_C$
```

920

```
GENERATE LASER BEAM OUTPUT
IN ACCORDANCE WITH $P_C$
```

930

```
MEASURE, AT A FIRST SENSOR, POWER $P_D$ OF LASER BEAM
DELIVERED FOR ADDITIVE MANUFACTURING PROCESS
```

940

```
MEASURE, AT A SECOND SENSOR, A POWER $P_O$ ASSOCIATED
WITH THE LASER BEAM OUTPUT FROM THE LASER SOURCE (AT
LEAST A PORTION OF AN OPTIC TRAIN BEING LOCATED
BETWEEN THE FIRST AND SECOND SENSORS)
```

950

```
MONITOR $P_C$, $P_O$, AND $P_D$ TO FACILITATE
CREATION OF INDUSTRIAL ASSET ITEM
```

960

```
RESPONSIVE TO THE MONITORING, AUTOMATICALLY
GENERATE AN ADVISORY INDICATION
```

*FIG. 9*

**FIG. 10**

1100 —

1110

RECEIVE, AT A LASER SOURCE, A LASER POWER
COMMAND SIGNAL $P_C$

1120

GENERATE LASER BEAM OUTPUT
IN ACCORDANCE WITH $P_C$

1130

MEASURE, AT A FIRST SENSOR, POWER $P_D$ OF LASER BEAM
DELIVERED FOR ADDITIVE MANUFACTURING PROCESS

1140

MEASURE, AT A SECOND SENSOR, A POWER $P_O$ ASSOCIATED
WITH THE LASER BEAM OUTPUT FROM THE LASER SOURCE (AT
LEAST A PORTION OF AN OPTIC TRAIN BEING LOCATED
BETWEEN THE FIRST AND SECOND SENSORS)

1150

MONITOR $P_C$, $P_O$, AND $P_D$ TO FACILITATE
CREATION OF INDUSTRIAL ASSET ITEM

1160

RESPONSIVE TO THE MONITORING, AUTOMATICALLY
PREDICT FUTURE PERFORMANCE OF THE SYSTEM

*FIG. 11*

*FIG. 12*

1300

INPUT
DEVICE
**1340**

COMMUNICATION
DEVICE
**1320**

OUTPUT
DEVICE
**1350**

PROCESSOR

**1310**

1330

PROGRAM **1312**

1360

LASER DEGRADATION
POWER LOOKUP TABLE

OPTIC TRAIN POWER LOSS
LOOKUP TABLE **1370**

1400

LASER POWER MONITORING
DATABASE

*FIG. 13*

1400

| LASER SYSTEM IDENTIFIER 1402 | $P_C$ 1404 | $P_O$ 1406 | $P_D$ 1408 | DATE AND TIME 1410 | ADVISORY INDICATION 1412 |
|---|---|---|---|---|---|
| LS_101 | | | | 4/5/2019 (12:55:31) | NO |
| LS_102 | | | | 4/5/2019 (13:29:42) | YES |
| LS_101 | | | | 4/6/2019 (09:14:43) | N0 |

*FIG. 14*

1500

**ADVISORY INDICATION:**
$P_D$ IS ONLY 80% OF $P_C$
LIKELY OPTIC TRAIN PROBLEM

1510

OPTIC TRAIN CALIBRATION CURVE

$P_D$

$TF_{P_O \rightarrow P_D}$

$P_O$

DISPLAY DETAILS 1520

*FIG. 15*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170242424 A1

- US 2006215246 A1